# EUROPÄISCHE PATENTSCHRIFT

(11) **EP 0 434 078 B1**
(45) Veröffentlichungstag und Bekanntmachung des Hinweises auf die Patenterteilung: **22.03.1995**
(21) Anmeldenummer: 90125066.2
(22) Anmeldetag: 21.12.1990
(51) Int. Cl.: B01D 17/025, E03F 5/16

(54) **Leichtflüssigkeitsabscheider**
Light liquid separator
Séparateur de liquides légers

(30) Priorität: 22.12.1989 DE 3943231
(43) Veröffentlichungstag der Anmeldung: 26.06.1991
(73) Patentinhaber: BERTSCH ARMATUREN UND APPARATEBAU GmbH, D-90451 Nürnberg (DE)
(72) Erfinder: Bertsch, Bernhard, W-8500 Nürnberg 40 (DE)
(74) Vertreter: Tergau, Enno, Dipl.-Ing.

(56) Entgegenhaltungen:
- EP-A- 0 046 277
- EP-A- 0 276 861
- CH-A- 126 547
- DE-A- 3 612 288
- FR-A- 710 237
- GB-A- 1 600 791
- PONS - Kompaktwörterbuch Französisch-Deutsch von Prof. Weis, 1989, siehe "captage".

## Beschreibung

Die Erfindung betrifft einen Leichtflüssigkeitsabscheider nach dem Oberbegriff des Anspruches 1.

Regenwasser und Schmutzwasser, das durch Leichtflüssigkeiten, z.B. Benzin oder Heizöl, mit einer Dichte bis 0,95 g/cm³ verunreinigt ist und das z.B. bei der Instandhaltung, Betankung und Reinigung von Fahrzeugen, in Anlagen zum Lagern, Abfüllen und Umschlagen von Kraftstoffen, Ölen oder Schmierstoffen wie beim Lagern und Umschlagen mineralölbehafteter Materialien anfällt, bedarf vor seiner Ableitung einer Vorbehandlung in einem Leichtflüssigkeitsabscheider. Leichtflüssigkeitsabscheider bestehen aus einem Aufnahmebehälter, in welchem eine Zwischenlagerung und Beruhigung des mit Leichtflüssigkeit befrachteten Schmutzwassers erfolgt. Die Zwischenlagerung und Beruhigung bewirken, daß sich die Leichtflüssigkeitsmenge auf Grund seiner geringeren Eigendichte selbsttätig oberhalb des Wasserspiegels sammelt. DIN 1999 bestimmt, daß derartige Leichtflüssigkeitsabscheider bei einer abgeschiedenen Leichtflüssigkeitsmenge entsprechend 4/5 der Speichermenge, jedoch mindestens halbjährlich zu leeren sind.

Aus der GB-A-1 600 791 und DE-A-3 612 288 sind Abscheider mit Absaugvorrichtungen bekannt, die eine Absaugung der oberhalb des Wasserspiegels abgeschiedenen Leichtflüssigkeit nur bis zu einem bestimmten Pegel des Speicherinhalts des Abscheiders gestatten. Dadurch wird erreicht, daß nur abgeschiedene Leichtflüssigkeit, nicht aber das darunter befindliche Wasser abgesaugt wird.

Die aus der GB-A-1 600 791 bekannte Einrichtung arbeitet zur Sicherstellung der Absaugung nur bis zu einem bestimmten Pegel nach Art eines Skimmers bzw. einer Überlaufsicherung, bei der ein mit seiner Ab- bzw. Überlauföffnung nach oben weisendes Ablaufrohr innerhalb der Flüssigkeit positioniert ist. Zur Abführung der oberhalb seines Mündungsrandes befindlichen Leichtflüssigkeit wird nur eine mit diesem Rohr zusammenwirkende Verschlußeinrichtung geöffnet.

Diese Abführung der abgeschiedenenen Leichtflüssigkeit erfordert einen erheblichen Bauaufwand, der in der Regel bereits beim Bau des Abscheiders zu leisten ist. Die für den Betrieb des Abscheiders erforderlichen Verschlüsse sind bleibender Bestandteil des Abscheiders. Sie bedürfen eines erheblichen Wartungsaufwandes, weil solche Abscheider wegen ihrer Unterbringung im Erdboden Korrosionseinflüssen ausgesetzt sind.

Die andere derartige, aus der DE-A-3 612 288 bekannte Einrichtung zur Sicherstellung der Absaugung der Leichtflüssigkeit nur bis zu einem bestimmten Pegel arbeitet mit einem Sensor, der auf eine vorbestimmte Höhe des Wasser- bzw. Ölspiegels anspricht und den Antrieb einer mit einem Saugstutzen verbundenen Pumpe einschaltet, wenn der Wasser- bzw. Ölspiegel die Pegelhöhe erreicht hat. Diese komplizierte Steuerungseinrichtung ist ebenfalls Störungseinflüssen durch die rauhe Umgebung des Einsatzortes eines solchen Abscheiders ausgesetzt.

Aus der FR-A-710 237 ist eine weitere Vorrichtung zum Abscheiden von Benzin oder anderen entsprechenden Kraftstoffen aus dem Abwasser bekannt, die bevorzugt überall dort zum Einsatz gelangen kann, wo leicht entflammbare Stoffe gehandhabt werden, die es aufzufangen gilt sowie zu verhindern, daß sie mit dem Abwasser in die Kanalisation gelangen. Zu diesem Zweck sind mehrere zum Teil mit Schikanen versehene Kammern in der Vorrichtung angeordnet, in welchen der Abwasserstrom verlangsamt wird und die darin mitgeführte Leichtflüssigkeit getrennt wird.

Die Leerung der Leichtflüssigkeit aus Abscheidern der vorgenannten Art erfolgt üblicherweise durch einen Einstiegsschacht von oben durch Absaugen mittels eines eingeführten Absaugrüssels oder Absaugschlauches. Meistens handelt es sich dabei um den Absaugschlauch eines Entsorgungsfahrzeuges.

In der EP-A-0 046 277 ist eine Vorrichtung zum Schwerkrafttrennen von Flüssigkeitsgemischen gezeigt und beschrieben, die einen Abscheideraum zur Trennung der Komponenten des Flüssigkeitsgemisches, eine Zulaufeinrichtung mit einer oder mehreren Zulauföffnungen für das Flüssigkeitsgemisch und einen Ablauf für eine der Komponenten des Flüssigkeitsgemisches aufweist.

Um einen ausreichend langen Strömungsweg für das Flüssigkeitsgemisch zu ermöglichen, ist vorzusehen, daß die aus der Zulaufeinrichtung zuströmende Flüssigkeit eine Strömungsrichtung einhält, die um mindestens 90° von der direkten Verbindungslinie zwischen Zulauf und Ablauf abweicht. Die schwerere Komponente des Flüssigkeitsgemisches setzt sich in der Abscheidekammer ab, während die leichtere Flüssigkeit unter Zwischenschaltung eines schwimmergesteuerten Ventils abfließen kann.

Aus der EP-A-0 276 861 ist ein Leichtflüssigkeitsabscheider mit einem Aufnahmebehälter bekannt geworden, bei welchem die abgeschiedene Leichtflüssigkeit von oben durch die Öffnung des Einstiegsschachtes mittels Absaugung über einen Absaugschlauch entsorgbar ist, wobei allerdings bestimmungsgemäß vorgesehen ist, die Schwerflüssigkeit in einen separaten Sammelraum abzuleiten, um so ein ausreichendes Speichervolumen für die abgeschiedene Leichtflüssigkeit zu ermöglichen. Bei deren Abpumpen allerdings ist es der Geschicklichkeit bzw. Sorgfalt und Erfahrung der jeweiligen hiermit befaßten Personen überlassen, bis zu welcher Eintauchtiefe der zum Abpumpen vorgesehene Entsorgungsschlauch in den Aufnahmebehälter eingeführt ist. Da sich außer der Leichtflüssigkeit üblicherweise auch Wasser in dem Sammelraum befindet, kann bei zu tiefem Absenken des Entsorgungsschlauches neben Leichtflüssigkeit auch Wasser mit abgepumpt werden, was im allgemeinen einen weiteren Abscheidevorgang erfordert.

In der Praxis erfolgt die Entsorgung überwiegend durch professionelle Entsorger auf Grund von Wartungsverträgen. Dabei werden nach der Erfahrung die Abscheider ohne Notwendigkeit vollständig geleert und die Entnahmemenge der Sondermüllbehandlung zugeführt. Die einschlägigen DIN-Normen enthalten keine Bestimmung über den zulässigen Wassergehalt der abgesaugten Entnahmemenge. Dies führt in vielen Fällen dazu, daß dadurch die Entnahmemenge einen unnötig großen Wasseranteil enthalten kann, der zusätzlich die Sondermüllentsorgung belastet und dessen Volumen wiederum unnötig durch eine entsprechende Trinkwassermenge beim Abscheider ersetzt wird.

Ausgehend von diesem Stand der Technik liegt der Erfindung die Aufgabe zugrunde, einen Abscheider der eingangs genannten Art zu schaffen, der diesen unnötigen Aufwand vermeidet und sicherstellt, daß die entleerte Leichtflüssigkeitsmenge nur noch mit allenfalls einem minimalen Optimum von Wasser im Sinne der angestrebten Ersparnisse befrachtet ist.

Diese Aufgabe wird durch die kennzeichnenden Merkmale des Anspruches 1 gelöst. Danach ist vorgesehen, daß ein von der Schachtöffnung nach unten ragendes Führungsrohr für die Umfassung und die umfangsseitige Trennung des Absaugschlauches vom Speicherinhalt vorgesehen ist, daß das Führungsrohr an seinem unteren Ende eine speicherflüssigkeitsdurchlässige Absenkbegrenzungseinrichtung für den darin eingeführten Absaugschlauch aufweist und daß durch die Absenkbegrenzungseinrichtung die Absaugung der Leichtflüssigkeit über den Absaugschlauch bis zum Abwasserpegel gewährleistet ist.

Der Innendurchmesser des verwendeten Führungsrohrs ist zweckmäßig so bemessen, daß alle üblichen Saugschläuche, möglicherweise auch solche mit endseitig befestigten, über den Schlauchumfang radial hinausstehenden Schraubflanschen in das Führungsrohr einführbar sind. Dazu kann das Führungsrohr beispielsweise mit einem maximalen Innendurchmesser versehen sein, der die störungsfreie Einführung und Aufnahme jedes üblichen Absaugschlauches ermöglicht. Wesentlich ist schließlich nur, daß der Mantel des Führungsrohres den Absaugschlauch umgibt und die Absaugung bis zum vorbestimmten Pegel am unteren Ende des Führungsrohres erfolgen kann.

Entsprechend einer bevorzugten Ausführungsform der Erfindung besitzt das Führungsrohr an seinem unteren Ende als speicherflüssigkeitsdurchlässige Absenkbegrenzungseinrichtung einen Endanschlag für den Absaugschlauch. Dabei ist vorteilhafterweise als Endanschlag für den Absaugschlauch ein Verschlußkorb vorgesehen.

Der erfindungsgemäße Abscheider bewirkt, daß der professionelle Entsorger beim Entleeren nur der abgeschiedenen Leichtflüssigkeit aus dem Abscheider keinerlei besondere Sorgfalt bzw. Vorsicht walten lassen muß, um dieses Ziel zu erreichen. Der Entsorger braucht den Absaugeschlauch lediglich so weit in das Führungsrohr einzuführen, bis das Ende des Absaugschlauches an die Absenkbegrenzungseinrichtung anschlägt. Weiter kann der Absaugschlauch nicht hinabgelassen werden.

In weiterer Ausgestaltung der Erfindung kann vorgesehen sein, daß der Verschlußkorb bzw. sein Boden höhenverstellbar und damit auf einen bestimmten Pegel des Speicherinhalts voreinstellbar am ortsfest fixierbaren Führungsrohr angeordnet ist.

Eine bevorzugte Weiterbildung kann darin bestehen, daß eine den Querschnitt des Einstiegsschachtes bis auf einen Durchgang für den Absaugschlauch überdeckende Sperrvorrichtung vorgesehen ist, welche lösbar am Aufnahmebehälter befestigt sein kann. Dadurch wird sichergestellt, daß der Absaugschlauch nicht vorbei am Führungsrohr und damit unbegrenzt in den Aufnahmebehälter des Abscheiders abgesenkt werden kann.

Zweckmäßig ist die Sperrvorrichtung ein Gitterrost, welches gleichzeitig der Aufhänger für das durch die Sperrvorrichtung nach oben hindurchgeführte Führungsrohr ist und an dem Aufnahmebehälter lösbar befestigt ist, beispielsweise durch eine Verschraubung. Die Lösbarkeit ist erforderlich, weil beispielsweise auch zu Kontroll- und Reparaturzwecken der Innenraum des Abscheiders zugänglich bleiben muß. Es soll jedoch verhindert werden, daß der Entsorger die Sperrvorrichtung einfach ausheben und damit deren Zweckbestimmung einfach aufheben kann.

Die Erfindung wird anhand eines in der Zeichnung dargestellten Ausführungsbeispieles näher erläutert.

Es zeigen:
Fig. 1 einen Vertikalschnitt durch den Abscheider und
Fig. 2 eine Draufsicht entsprechend Pfeil II in Fig. 1.

Der Leichtflüssigkeitsabscheider enthält einen Aufnahmebehälter 1, der beispielsweise aus Betonteilen vorgefertigt sein kann. Auch eine Fertigung aus Ortbeton kann je nach Größe und Einsatzbedingungen vorgenommen werden. In Einbaustellung ist der Aufnahmebehälter 1 meist im Erdreich versenkt angeordnet. Sein Innenraum 2 ist dann nur von oben durch einen Einstiegsschacht 3 zugänglich. Die Öffnung 4 des Einstiegschachtes 3 ist durch einen kanaldeckelartigen Verschlußdeckel (nicht dargestellt) verschließbar.

Der Aufnahmebehälter 1 enthält ein Zulaufrohr 5 für das mit Leichtflüssigkeit befrachtete Schmutzwasser. Aus dem Zulaufrohr 5 fließt das befrachtete Schmutzwasser über ein Beruhigungsabteil 6 in den Speicherraum 7. Dort erfolgt selbsttätig der Abscheidevorgang, indem sich die Leichtflüssigkeit auf Grund ihrer gegenüber Wasser geringeren Dichte oberhalb des Wassers abscheidet.

Der Abfluß 8 für das von der Leichtflüssigkeit separierte Wasser geht vom Höhenniveau etwa des Bodens 9 des Aufnahmebehälters 1 aus. Die innerhalb des Speicherraumes 7 noch verlaufende Abflußleitung trägt die Bezugsziffer 10. Die im Bereich des Bodens 9 befindliche Eintrittsöffnung 11 in die Abflußleitung 10 ist durch eine selbsttätig arbeitende Verschlußeinrichtung 12 verschließbar. Die Verschlußeinrichtung 12 ist durch einen Schwimmer 13 gesteuert. Wenn die Menge von sich oberhalb des Wasseranteils abscheidender Leichtflüssigkeit zu groß wird, so sinkt der Schwimmer 13 nach unten und die Verschlußeinrichtung 12 verschließt die Eintrittsöffnung 11. Dies ist für den Benutzer gleichzeitig das Signal dafür, daß eine Leerung des Abscheiders erforderlich ist.

Erfindungsgemäß soll jedoch durch eine einfache Einrichtung sichergestellt werden, daß mit der Leerung im wesentlichen nur abgeschiedene Leichtflüssigkeit und nicht in unnötig großem Umfang auch bereits von Leichtflüssigkeit befreites Wasser abgeführt wird, welches sich unterhalb der Leichtflüssigkeit im Innenraum 2 angesammelt hat. Dazu dient das von der Schachtöffnung 4 nach unten ragende Führungsrohr 14 für die Umfassung und umfangsseitige Trennung des von oben in Pfeilrichtung 15 eingeführten, nicht dargestellten Absaugschlauches vom Speicherinhalt. Zu diesem Zweck ist das Führungsrohr 14 an seinem unteren Ende 16 mit einer siebartig wirksamen und dadurch speicherflüssigkeitsdurchlässigen Absenkbegrenzungseinrichtung in Form eines Verschlußkorbes 17 versehen.

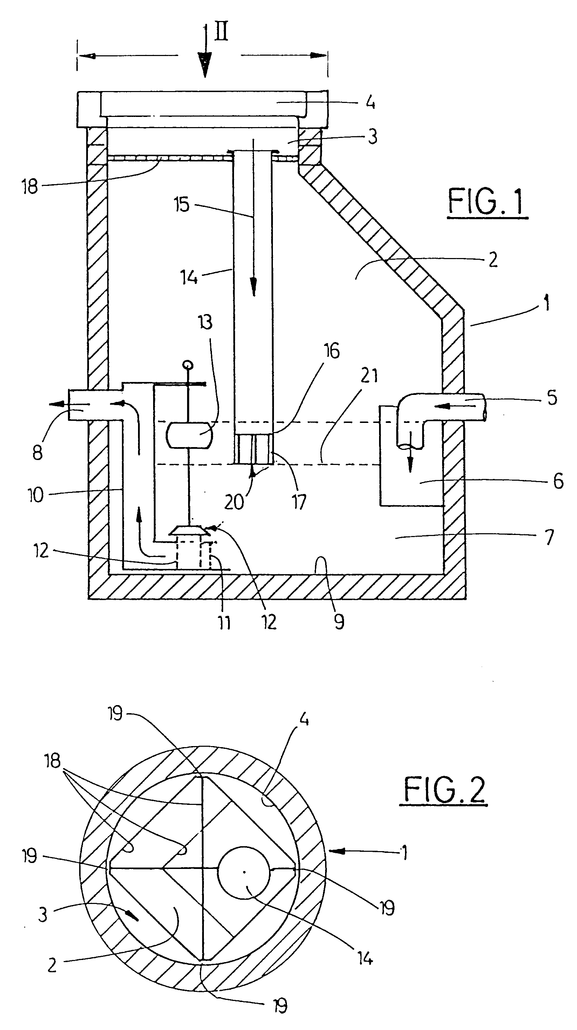

Weiterhin ist die Öffnung 4 durch eine den Querschnitt des Einstiegsschachtes 3 überdeckende Sperrvorrichtung in Form eines Gitterrostes 18 versperrt, welches einen Durchgang für das Führungsrohr 14 bildet, insbesondere als Aufhängeträger für das Führungsrohr 14 ausgebildet ist. Der Gitterrost 18 ist lösbar am Aufnahmebehälter 1, genauer gesagt an dessen Einstiegsschacht 3 im Bereich der Befestigungsstellen 19 befestigt. Mindestens eine der Befestigungsstellen 19 ist eine Verschraubung, so daß der Gitterrost 18 nicht ohne weiteres aus seiner in Fig. 1 dargestellten Fixierstellung lösbar bzw. aushebbar ist.

Jedenfalls ist der Abstand zwischen den einzelnen Streben des Gitterrostes 18 so gewählt, daß durch die Zwischenräume der Absaugschlauch nicht hindurchführbar ist. Der Absaugschlauch kann nur in Pfeilrichtung 15 in das Führungsrohr 14 in Richtung auf den Speicherinhalt abgesenkt werden.

Die Wirkung des Erfindungsgegenstandes besteht darin, daß der Entsorger nur den Absaugschlauch in das Führungsrohr 14 einzuführen und darin abzusenken hat, bis der Absaugschlauch mit seiner Saugmündung an den Boden 20 des Verschlußkorbes anschlägt. Die gegebenenfalls einstellbare Positionierung des Bodens 20 des Verschlußkorbes 17 bestimmt den Pegel 21 bzw. die Schichthöhe, bis zu der maximal eine Absaugung des Speicherinhalts möglich ist, ohne daß dies dem Entsorger eine besondere Aufmerksamkeit abverlangt. So kann beispielsweise der Boden 20 des Verschlußkorbes 17 auf einen kritischen Stand des Pegels 21 eingestellt werden, bei welchem die Verschlußeinrichtung 12 den Abfluß 8 sperrt. Wird dann der Speicherinhalt des Aufnahmebehälters 1 entleert, so ist sichergestellt, daß diese Entleerung praktisch nur die abgeschiedene, oberhalb des Pegelstandes 21 befindliche Leichtflüssigkeit betrifft und nicht das darunter befindliche, von der Leichtflüssigkeit befreite Schmutzwasser.

### Bezugszeichenliste

- 1: Aufnahmebehälter
- 2: Innenraum
- 3: Einstiegschacht
- 4: Öffnung
- 5: Zulaufrohr
- 6: Beruhigungsabteil
- 7: Speicherraum
- 8: Abfluß
- 9: Boden
- 10: Abflußleitung
- 11: Eintrittsöffnung
- 12: Verschlußeinrichtung
- 13: Schwimmer
- 14: Führungsrohr
- 15: Richtung
- 16: unteres Ende
- 17: Verschlußkorb
- 18: Gitterrost
- 19: Befestigungsstelle
- 20: Boden
- 21: Pegel

## Patentansprüche

1. Leichtflüssigkeitsabscheider mit einem Aufnahmebehälter (1), wobei die abgeschiedene Leichtflüssigkeit von oben durch die Öffnung (4) eines Einstiegsschachtes (3) mittels Absaugung über einen Absaugschlauch entsorgbar ist,
dadurch gekennzeichnet, daß
ein von der Schachtöffnung (4) nach unten ragendes Führungsrohr (14) für die Umfassung und die umfangsseitige Trennung des Absaugschlauches vom Speicherinhalt vorgesehen ist, daß das Führungsrohr (14) an seinem unteren Ende (16) eine speicherflüssigkeitsdurchlässige Absenkbegrenzungseinrichtung für den darin eingeführten Absaugschlauch aufweist und daß durch die Absenkbegrenzunseinrichtung die Absaugung der Leichtflüssigkeit über den Absaugschlauch bis zum Abwasserpegel (21) gewährleistet ist.

2. Abscheider nach Anspruch 1,
dadurch gekennzeichnet,
daß die speicherflüssigkeitsdurchlässige Absenkbegrenzungseinrichtung an dem unteren Ende (16) des Führungsrohrs (14) ein Endanschlag für den Absaugschlauch ist.

3. Abscheider nach Anspruch 1 oder 2,
dadurch gekennzeichnet,
daß am unteren Ende (16) des Führungsrohres (14) als Absenkbegrenzungseinrichtung für den Absaugschlauch ein Verschlußkorb (17) vorgesehen ist.

4. Abscheider nach einem oder mehreren der vorhergehenden Ansprüche
dadurch gekennzeichnet,
daß der Verschlußkorb (17) bzw. sein Boden (20) höhenverstellbar am ortsfest fixierbaren Führungsrohr (14) angeordnet ist.

5. Abscheider nach einem oder mehreren der vorhergehenden Ansprüche
dadurch gekennzeichnet,
daß eine den Querschnitt des Einstiegsschachtes (3) bis auf einen Durchgang für den Absaugschlauch überdeckende Sperrvorrichtung vorgesehen ist.

6. Abscheider nach Anspruch 5
dadurch gekennzeichnet,
daß die Sperrvorrichtung lösbar am Aufnahmebehälter (1) befestigt ist.

7. Abscheider nach Anspruch 6,
dadurch gekennzeichnet,
daß die Sperrvorrichtung mit dem Aufnahmebehälter (1) verschraubt ist.

8. Abscheider nach einem der vorhergehenden Ansprüche
dadurch gekennzeichnet,
daß die Sperrvorrichtung ein Gitterrost (18) ist, das als Aufhängeträger für das Führungsrohr (14) vorgesehen ist.

## Claims

1. Light liquid separator equipped with a receiver tank (1), designed to ensure that the precipitated light liquid can be disposed of from the top through the opening (4) of an access shaft (3) by means of suction via a suction hose,
characterised as follows:
a guide tube (14) positioned from the opening of the shaft (4) downwards is provided to accommodate the suction hose and to separate the hose circumferentially from the content of the storage tank; and the guide tube (14) is equipped at its lower end (16) with a device designed to limit the lowering of the suction hose introduced into the tube, such device being permeable to the storage liquid; and by means of this device designed to limit the lowering, it is ensured that the light liquid is sucked off via the suction hose down to the waste water level (21).

2. Separator according to claim 1,
characterised as follows:
at the lower end (16) of the guide tube (14), the device designed to limit the lowering and permeable to the storage liquid functions as a limit stop for the suction hose.

3. Separator according to claim 1 or 2,
characterised as follows:
at the lower end (16) of the guide tube (14) a sealing cage (17) is provided to limit the lowering of the suction hose.

4. Separator according to one or several of the foregoing claims,
characterised as follows:
the sealing cage (17) and/or its bottom (20), equipped with a height adjusting device, is positioned at the guide tube (14) which can be locked in position.

5. Separator according to one or several of the foregoing claims,
characterised as follows:
a locking device is envisaged to cover the cross section of the access shaft (3) except for an opening to accommodate the suction hose.

6. Separator according to claim 5,
characterised as follows:
the locking device is fixed to the receiver tank (1), but is detachable.

7. Separator according to claim 6,
characterised as follows:
the locking device is bolted to the receiver tank (1).

8. Separator according to one of the foregoing claims,
characterised as follows:
the locking device is a gridiron construction (18) designed to function as a suspension bracket for the guide tube (14).

## Revendications

1. Séparateur de liquides legers avec bac de réception (1), le liquide leger séparé pouvant être évacué du haut à travers l'ouverture (4) d'un puits d'entrée (3) par aspiration au moyen d'un tuyau d'aspiration,
caractérisé en ce que
un tube de guidage (14) s'étendant vers le bas est prévu pour entourer et séparer la périphérie du tuyau d'aspiration, du contenu du réservoir, en ce que l'extrémité inférieure (16) du tube de guidage (14) est pourvue d'un dispositif de limitation de descente, perméable au liquide contenu dans le réservoir, pour le tuyau d'aspiration guidé dans ce tube, et en ce que le dispositif de limitation de descente garantit l'aspiration du liquide leger au moyen du tuyau d'aspiration jusqu'au niveau des eaux usées.

2. Séparateur selon la revendication 1,
caractérisé en ce que
le dispositif de limitation de descente, perméable au liquide contenu dans le réservoir, qui se trouve à l'extrémité inférieure (16) du tube de guidage (14) est une butée finale pour le tuyau d'aspiration.

3. Séparateur selon l'une des revendications 1 ou 2,
caractérisé en ce que
un panier de fermeture (17) est prévu à l'extrémité inférieure (16) du tube de guidage (14) en tant que dispositif de limitation de descente pour le tuyau d'aspiration.

4. Séparateur selon l'une ou plusieurs des revendications précédentes,
caractérisé en ce que
le panier de fermeture (17), c'est-à-dire son fond (20), est réglable en hauteur sur le tube de guidage (14) qui peut être fixé de façon stationnaire.

5. Séparateur selon l'une ou plusieurs des revendications précédentes,
caractérisé en ce que
un dispositif de retenu est prévu, qui couvre la section transversale du puits d'entrée (3) à l'exception d'un passage pour le tuyau d'aspiration.

6. Séparateur selon la revendication 5,
caractérisé en ce que
le dispositif de retenu est fixé de façon détachable au bac de réception (1).

7. Séparateur selon la revendication 6,
caractérisé en ce que
le dispositif de retenu est vissé au bac de réception (1).

8. Séparateur selon l'une des revendications précédentes,
caractérisé en ce que
le dispositif de retenu est un grillage (18), prévu comme support suspendu pour le tube de guidage (14).
